# EUROPÄISCHE PATENTANMELDUNG

(11) **EP 3 637 375 A1**
(43) Veröffentlichungstag der Anmeldung: **15.04.2020**
(21) Anmeldenummer: 18200139.6
(22) Anmeldetag: 12.10.2018
(51) Int. Cl.: G07C 9/00

(54) **BESUCHERVERWALTUNGSSYSTEM**

(71) Anmelder: Currenta GmbH & Co. OHG, 51373 Leverkusen (DE)
(72) Erfinder: TEERMANN, Ilka, 59227 Ahlen (DE); BEYER, Joachim, 51515 Kürten (DE); BIYDA, Andrea, 51377 Leverkusen (DE); CETIN, Sertan-Soner, 95425 Unna (DE); DOHMSTREICH, Andreas, 50823 Köln (DE); GÖRING, Hans-Jürgen, 41541 Dormagen (DE); LANGHIRT, Benjamin, 40789 Monheim (DE); SCHUBERT, Linda, 50169 Kerpen (DE)
(74) Vertreter: Michalski Hüttermann & Partner Patentanwälte mbB

(57) **Zusammenfassung**

Die vorliegende Erfindung betrifft das technische Gebiet der Verwaltung von Besuchern, die Zutritt zu einem geschützten Bereich wünschen oder benötigen. Gegenstände der vorliegenden Erfindung sind ein System, ein Verfahren und ein Computerprogrammprodukt zur Besucherverwaltung.

## Beschreibung

Die vorliegende Erfindung betrifft das technische Gebiet der Verwaltung von Besuchern, die Zutritt zu einem geschützten Bereich wünschen oder benötigen. Gegenstände der vorliegenden Erfindung sind ein System, ein Verfahren und ein Computerprogrammprodukt zur Besucherverwaltung.

Viele Unternehmen empfangen täglich Besucher, die nicht zum Unternehmen gehören, wie beispielsweise Geschäftspartner, Kunden, Bewerber, Dienstleister oder dergleichen. Dabei gewähren die Unternehmen solchen Besuchern Zutritt zu Gebäuden oder Bereichen, die für die Öffentlichkeit üblicherweise nicht frei zugänglich sind, z.B., weil dort erhöhte Sicherheitsbestimmungen gelten, um Beschädigungen zu vermeiden, Diebstahl zu verhindern, Einblicke in Betriebsgeheimnisse zu unterbinden u.v.m.

Zutrittskontrollsysteme helfen, den Zutritt zu regeln und nur berechtigten Personen Zutritt zu gewähren. Solche Systeme sind im Stand der Technik ausgiebig beschrieben (siehe z.B. DE102009010587A1, WO0182236A1 und US2018174384).

Nachteilig an den bestehenden Systemen ist der erhöhte Aufwand insbesondere beim Eintreffen von Besuchern. Üblicherweise müssen sich die Besucher beim Besucherempfang anmelden; üblicherweise erhalten Sie einen Besucherausweis und der Einladende wird benachrichtigt, dass Besucher angekommen sind, um sie abzuholen oder den Besuch zu bestätigen. Dabei kommt es sehr oft zu Wartezeiten, z.B. dann, wenn eine Mehrzahl an Besuchern gleichzeitig eintrifft, oder wenn der Einladende nicht erreicht werden kann oder dergleichen. Dies kann bei den Besuchern zu Unmut führen.

Ausgehend vom beschriebenen Stand der Technik bestand die objektive technische Aufgabe darin, ein Besucherverwaltungssystem bereitzustellen, das berechtigten Besuchern einen schnellen und unkomplizierten Zutritt zu geschützten Bereichen gewährt, ohne dass dabei Kompromisse in Bezug auf die Sicherheit eingegangen werden.

Diese Aufgabe wir durch die Gegenstände der unabhängigen Patentansprüche gelöst. Bevorzugte Ausführungsformen finden sich in den abhängigen Patentansprüchen, in der vorliegenden Beschreibung und in den Figuren.

Ein erster Gegenstand der vorliegenden Erfindung ist ein System umfassend
- eine Verwaltungseinheit,
- eine Registrierungseinheit und
- eine Besucherempfangseinheit,
wobei die Verwaltungseinheit konfiguriert ist, aus einer elektronischen Mitteilung gerichtet an Teilnehmer eines Ereignisses mindestens die folgenden Ereignisinformationen zu extrahieren: Ereignisort, Ereignisanfangszeit, Kontaktdaten von Besuchern des Ereignisses,
wobei die Verwaltungseinheit konfiguriert ist, den Besuchern eine elektronische Nachricht zu übermitteln, wobei die elektronische Nachricht den Besuchern einen Zugang zu der Registrierungseinheit ermöglicht,
wobei die Registrierungseinheit konfiguriert ist, von den Besuchern Identitätsdaten zu empfangen, und die Besucher für das Ereignis zu registrieren,
wobei die Besucherempfangseinheit konfiguriert ist,
- Daten von den Besuchern an einem Tag, an dem das Ereignis stattfinden soll, zu empfangen,
- anhand der empfangenen Daten die Identität der Besucher festzustellen,
- anhand der empfangenen Daten die Authentizität der Besucher festzustellen,
- zu prüfen, ob das Ereignis stattfindet,
- zu prüfen, ob die Besucher für das Ereignis registriert sind, und
- für den Fall, dass das Ereignis stattfindet, und die Besucher für das Ereignis registriert sind, den registrierten Besuchern eine Zutrittsfreigabe zu erteilen.

Ein weiterer Gegenstand der vorliegenden Erfindung ist ein Verfahren zur Verwaltung des Zutritts eines Besuchers zu einem geschützten Bereich, wobei das Verfahren die folgenden Schritte umfasst:
- Extrahieren von Ereignisinformationen aus einem Planungsdatensatz, wobei die Ereignisinformationen Informationen zu einem Ereignis und Kontaktdaten des Besuchers umfassen,
- Übermitteln einer elektronischen Mitteilung an den Besucher, wobei die Mitteilung dem Besucher einen Zugang zu einer Registrierungseinheit verschafft,
- Empfangen von Identitätsdaten des Besuchers über den Zugang zu der Registrierungseinheit,
- Erzeugen eines Ereignisdatensatzes auf Basis des Planungsdatensatzes und der vom Besucher übermittelten Identitätsdaten,
- Übermitteln des Ereignisdatensatzes an eine Besucherempfangseinheit,
- Identifizieren des Besuchers am Tag des Ereignisses,
- Authentifizieren des Besuchers am Tag des Ereignisses,
- Prüfen, ob der Besucher für das Ereignis registriert ist,
- Erteilen einer Zutrittsfreigabe für den Fall, dass der Besucher registriert ist und dass das Ereignis stattfindet.

Ein weiterer Gegenstand der vorliegenden Erfindung ist ein Computerprogrammprodukt umfassend einen Programmcode, der auf einem Datenträger gespeichert ist, und der ein System umfassend eine Verwaltungseinheit, eine Registrierungseinheit und eine Besucherempfangseinheit dazu veranlasst, die folgenden Schritte auszuführen, wenn der Programmcode in den Arbeitsspeichern der genannten Einheiten geladen ist,
- Extrahieren von Ereignisinformationen aus einem Planungsdatensatz, wobei die Ereignisinformationen Informationen zu einem Ereignis und Kontaktdaten mindestens eines Besuchers umfassen,
- Übermitteln einer elektronischen Mitteilung an den mindestens einen Besucher, wobei die Mitteilung dem mindestens einen Besucher einen Zugang zu einer Registrierungseinheit verschafft,
- Empfangen von Identitätsdaten des mindestens einen Besuchers über den Zugang zu der Registrierungseinheit,
- Erzeugen eines Ereignisdatensatzes auf Basis des Planungsdatensatzes und der von dem mindestens einen Besucher übermittelten Identitätsdaten,
- Übermitteln des Ereignisdatensatzes an die Besucherempfangseinheit,
- Identifizieren des Besuchers am Tag des Ereignisses,
- Authentifizieren des Besuchers am Tag des Ereignisses,
- Prüfen, ob der mindestens eine Besucher für das Ereignis registriert ist,
- Erteilen einer Zutrittsfreigabe für den Fall, dass der Besucher registriert ist und dass das Ereignis stattfindet.

Die Erfindung wird nachstehend näher erläutert, ohne zwischen den Erfindungsgegenständen (System, Verfahren, Computerprogrammprodukt) zu unterscheiden. Die nachfolgenden Erläuterungen sollen vielmehr für alle Erfindungsgegenstände (System, Verfahren, Computerprogrammprodukt) in analoger Weise gelten, unabhängig davon, in welchem Kontext sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die vorliegende Erfindung dient der Verwaltung und der Kontrolle des Zutritts zu einem geschützten Bereichs durch einen Besucher.

Ein "Besucher" im Sinne der vorliegenden Erfindung ist eine natürliche Person, die Zutritt zu einem geschützten Bereich begehrt oder benötigt und deren Identität, Authentizität und Berechtigung zum Zutritt des geschützten Bereiches vorab festgestellt wird. In der vorliegenden Beschreibung wird der Besucher auch als externer Teilnehmer eines Ereignisses bezeichnet, das in einem geschützten Bereich stattfindet. Ein externer Teilnehmer unterscheidet sich von einem internen Teilnehmer dadurch, dass der externe Teilnehmer eine Zulassung für den Zutritt zu dem geschützten Bereich benötigt, während ein interner Teilnehmer eine solche Zulassung bereits besitzt.

In einer bevorzugten Ausführungsform handelt es sich bei einem internen Teilnehmer um einen Angehörigen (z.B. einen Angestellten oder ein Mitglied oder dergleichen) einer (rechtlichen) Einheit (z.B eines Unternehmens oder einer Institution oder eines Vereins oder dergleichen). Ein Besucher ist hingegen kein Angehöriger der Einheit,

Unter einem "geschützten Bereich" wird ein Bereich verstanden, der für die Öffentlichkeit nicht frei zugänglich ist. Der Schutzbedarf kann sich beispielsweise aus erhöhten Sicherheitsbestimmungen ergeben. So gehen zum Beispiel von Produktionsanlagen, Umspannwerken, Recyclinghöfen, Umladestationen, Lagerstätten und dergleichen Gefahren für Menschen aus, weswegen Personen, die keine entsprechende Sicherheitseinweisung erhalten haben und/oder keine entsprechenden Sicherheitsmaßnahmen ergriffen haben (z.B. das Tragen von Schutzkleidung) überhaupt nicht oder nicht unbeaufsichtigt einen solchen Bereich betreten sollten. Der Schutzbedarf kann sich aber auch dadurch ergeben, dass der Bereich vor Vandalismus, Diebstahltatbeständen oder dergleichen geschützt werden soll. Der Schutzbereich kann sich auch dadurch ergeben, dass der Bereich vor Industriespionage geschützt werden soll. Weitere Gründe sind denkbar.

Unter dem Begriff "Bereich" kann ein Gebäude, ein Raum eines Gebäudes, ein Firmengelände, ein Produktionsstandort, ein Areal oder dergleichen verstanden werden. Üblicherweise ist der Bereich nur über ausgewiesene Zutrittsmöglichkeiten (Zugänge, Ein-/Ausgänge), die über Zutrittskontrolleinheiten verfügen, betretbar und/oder befahrbar.

Die vorliegende Erfindung hat zum Ziel, einen Besucher am Tag seines Besuches möglichst wenig mit dem Anmelde- und Abmeldeprozess in Berührung zu bringen, so dass er sich voll und ganz auf den eigentlichen Besuch konzentrieren kann. Ein erster Schritt besteht deshalb darin, den Besuch bereits frühzeitig zu planen und Teile des Anmeldeprozesses zeitlich vorzuverlagern.

Ein Besuch hat üblicherweise einen Anlass. Der Anlass eines Besuchs ist üblicherweise ein Ereignis, das an einem Ereignisort zu einer Ereigniszeit stattfindet und an dem der Besucher teilnehmen möchte, soll, kann oder muss. Ein "Ereignis" kann ein Gespräch, ein Workshop, eine Bewerbung, eine Präsentation, eine Demonstration, die Ausführung einer Dienstleistung, Wartungsarbeiten oder dergleichen sein.

Der Ereignisort befindet sich innerhalb des geschützten Bereichs oder ist mit diesem identisch.

In einem ersten Schritt wird das Ereignis geplant. Zur Planung des Ereignisses gehört die Festlegung des Ereignisortes, an dem das Ereignis stattfinden soll, die Festlegung mindestens einer Ereignisanfangszeit, zu der das Ereignis beginnen soll und die Festlegung von Teilnehmern, die dem Ereignis beiwohnen sollen. Denkbar ist, dass noch weitere Parameter festgelegt werden, wie beispielsweise ein Ereignisende (Zeit, zu der das Ereignis beendet sein soll), einen Ablaufplan (Agenda), einen Ereignisanlass und/oder dergleichen. Alle Parameter, die das geplante Ereignis spezifizieren, bilden einen Planungsdatensatz.

Zur Planung eines Ereignisses (und zur Erzeugung des Planungsdatensatzes) wird üblicherweise eine Planungseinheit verwendet, die ein Bestandteil des erfindungsgemäßen Systems sein kann. Vorzugsweise gibt es eine Vielzahl an Planungseinheiten. Vorzugsweise verfügt eine Planungseinheit über Mittel, die es erlauben, die Teilnehmer von dem geplanten Ereignis in Kenntnis zu setzen. Ein Computer, auf dem beispielsweise das Computerprogramm Microsoft Outlook oder das Computerprogramm IBM Notes (ehemals Lotus Notes) installiert ist, kann eine Planungseinheit im Sinne der vorliegenden Erfindung sein. Solche Computerprogramme ermöglichen das Empfangen und Versenden von E-Mails sowie das Verwalten von Terminen, Kontakten, Aufgaben und Notizen auf dem Computer. Es ist beispielsweise denkbar, dass ein Nutzer das Ereignis plant, indem er einen Termineintrag in einen elektronischen Kalender erzeugt. Er kann den Ereignisort und die Ereigniszeit spezifizieren sowie Teilnehmer benennen. Er kann E-Mail-Adressen der Teilnehmer als Kontaktdaten eingeben, um ihnen eine E-Mail mit den Ereignisdaten (z.B. als Einladung) zukommen zu lassen.

Ein "Computer" ist ein System zur elektronischen Datenverarbeitung, das mittels programmierbarer Rechenvorschriften Daten verarbeitet. Ein Computer umfasst üblicherweise mindestens einen Prozessor (CPU), einen Arbeitsspeicher (RAM) und ein Bussystem zur Übertragung von Daten zwischen den verschiedenen Computerbestandteilen. Zum Computer gehört üblicherweise auch eine Peripherie; als "Peripherie" bezeichnet man alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Von der Planungseinheit wird der Planungsdatensatz an die Verwaltungseinheit übermittelt. Die Verwaltungseinheit ist üblicherweise ein Computer, der mittels eines Computerprogramms konfiguriert ist, die hier beschriebenen Funktionen auszuführen. Es ist auch denkbar, dass Planungseinheit und Verwaltungseinheit eine integrierte Einheit bilden. Ferner ist denkbar, dass eine oder mehrere der nachfolgend beschriebenen Funktionen der Verwaltungseinheit durch die Planungseinheit übernommen werden.

Die Übermittlung von Daten/Informationen von einer Einheit zu einer anderen Einheit erfolgt üblicherweise über ein Netzwerk, dem beide Einheiten angehören. Ein Netzwerk (auch Rechnernetz genannt) ist ein Zusammenschluss verschiedener technischer, primär selbstständiger elektronischer Systeme (insbesondere Computer, aber auch Sensoren, Aktoren, Agenten und sonstiger funktechnischer Komponenten usw.), das die Kommunikation der einzelnen Systeme untereinander ermöglicht. Die Kommunikation erfolgt über verschiedene Protokolle, die mit dem ISO/OSI-Modell strukturiert werden können. Beispiele für Netzwerke sind ein lokales Rechnernetz (LAN: Local Area Network) oder das Internet. Die Übermittlung von Daten/Informationen kann über Funk und/oder kabelgebunden erfolgen. Vorzugsweise erfolgt die Übermittlung von Daten/Informationen in verschlüsselter Form.

Wenn in der vorliegenden Beschreibung oder den Patentansprüchen beschrieben ist, dass eine Einheit Daten/Informationen an eine andere Einheit übermittelt, so schließt dies den Fall mit ein, dass die andere Einheit die Daten/Informationen von der einen Einheit abruft.

Die Übermittlung des Planungsdatensatzes von der Planungseinheit an die Verwaltungseinheit kann beispielsweise mittels Versand des Planungsdatensatzes als elektronische Nachricht (E-Mail) erfolgen. Es ist denkbar, dass die Verwaltungseinheit über eine Maschinen-Mailbox (*non-personal mailbox*) verfügt, die automatisiert ausgelesen wird. Die Übermittelung als elektronische Nachricht hat den Vorteil, dass der Nutzer der Planungseinheit eine Kopie der Ereignisdaten an die Verwaltungseinheit übermittelt, wenn er die Ereignisdaten den Teilnehmer per E-Mail zusendet, indem er einfach die E-Mail-Adresse als zusätzliche Empfangsadresse aufnimmt. Diese Lösung hat zudem den Vorteil, dass keine spezifische Schnittstelle zwischen der Planungseinheit und der Verwaltungseinheit definiert und eingerichtet werden muss. Zudem ermöglicht diese Lösung eine Trennung zwischen Planungseinheit und Verwaltungseinheit: als Planungseinheit kann jeder Computer fungieren, auf dem ein Computerprogramm zur Terminplanung installiert ist; die Verwaltungseinheit ist eine spezialisierte Einheit, die üblicherweise nur für die Mitarbeiter der Besucherverwaltung benutzt wird.

Es ist aber auch denkbar, dass auf der Planungseinheit ein Computerprogramm installiert ist (z.B. als Software-Agent oder Add-on- oder Plug-in- oder Standalone-Software), das den Planungsdatensatz automatisiert aus den Ereignisdaten und/oder den Eingaben eine Nutzers extrahiert oder mit dem der Planungsdatensatz erzeugt wird, und das die Planungsdaten über eine definierte und spezifizierte Schnittstelle an die Verwaltungseinheit übermittelt.

Die Verwaltungseinheit ist so konfiguriert, dass sie aus dem Planungsdatensatz zumindest die Kontaktdaten der Besucher, den Ereignisort und die Ereignisanfangszeit extrahiert.

Die Verwaltungseinheit kann so konfiguriert sein, dass sie automatisch erkennt, ob es sich bei einem Teilnehmer um eine Person handelt, für die keine Registrierung zu dem Ereignis erforderlich ist (z.B. der Gastgeber, Kollegen des Gastgebers oder ein anderer "interner" Teilnehmer) oder ob es sich um einen Besucher handelt, für den eine Registrierung erforderlich ist (Betriebsfremder, "externer" Teilnehmer). Die automatische Differenzierung zwischen internen und externen Teilnehmern kann beispielsweise anhand der E-Mail-Adressen erfolgen. Eine E-Mail-Adresse besteht aus zwei Teilen, die durch ein @-Zeichen getrennt sind: einem so genannten lokalen Teil, der vor dem @-Zeichen steht und einem so genannten Domänenteil, der nach dem @-Zeichen steht. Es ist denkbar, dass in einer Datenbank, auf die die Verwaltungseinheit zugreifen kann, die Domänenteile von E-Mail-Adressen gespeichert sind, deren Inhaber als interne Teilnehmer zu klassifizieren sind. Hat ein Teilnehmer eine E-Mail-Adresse, deren Domänenteil nicht in der Datenbank aufgeführt ist, handelt es sich um die E-Mail-Adresse eines Besuchers. Denkbar ist auch, dass die Namen der internen Teilnehmer in einer Datenbank gespeichert sind, auf die die Verwaltungseinheit zugreifen kann. Ist der Name eines Teilnehmers nicht in der Datenbank gespeichert, handelt es sich um den Namen eines Besuchers.

Denkbar ist aber auch, dass die externen Teilnehmer (Besucher) und/oder die internen Teilnehmer durch einen Nutzer identifiziert werden, zum Beispiel durch den Nutzer der Planungseinheit, indem dieser bei der Planung des Ereignisses beispielsweiße durch eine Markierung (Ankreuzen einer virtuellen Box oder dergleichen) für die einzelnen Teilnehmer spezifiziert, ob es sich um einen internen oder einen externen Teilnehmer handelt.

Die Verwaltungseinheit ist so konfiguriert, dass sie die Besucher auf Basis der extrahierten Kontaktdaten (vorzugsweise auf Basis der E-Mail-Adressen) kontaktiert. Dabei übermittelt die Verwaltungseinheit den Besuchern eine elektronische Nachricht, die den Besuchern den Zugang zu der Registrierungseinheit ermöglicht. Dies kann beispielsweise durch Übermittlung eines Weblinks erfolgen, wobei der Weblink auf ein Webportal verweist, das als Schnittstelle zur Registrierungseinheit fungiert. Denkbar ist auch, dass den Besuchern der Zugang zur Registrierungseinheit durch die Planungseinheit verschafft wird, z.B. indem ein Weblink auf das Webportal, das als Schnittstelle zur Registrierungseinheit fungiert, zusammen mit der Einladung zu dem Ereignis an den Besucher übermittelt wird.

Die Registrierungseinheit ist üblicherweise ein Computer, der mittels eines Computerprogramms konfiguriert ist, die hier beschriebenen Funktionen auszuführen. Es ist auch denkbar, dass Registrierungseinheit und Verwaltungseinheit eine integrierte Einheit bilden. Es ist denkbar, dass die Verwaltungseinheit eine oder mehrere der nachfolgend beschriebenen Funktionen ausführt.

Über die elektronische Nachricht werden die Besucher aufgefordert, personenbezogene Daten (Identitätsdaten) in eine oder mehrere Eingabemasken des Webportals einzugeben, sofern diese Daten nicht bereits aus dem Planungsdatensatz bekannt sind, um sich für das Ereignis zu registrieren.

Die Registrierungseinheit ist konfiguriert, die Identitätsdaten von den Besuchern entgegenzunehmen (zu empfangen). Bei den Identitätsdaten handelt es sich um ein oder mehrere der folgenden Daten: Vorname, Nachname, Titel, Geschlecht, Geburtsdatum, Geburtsort, Ausweisnummer (z.B. Nummer des Reisepasses oder des Personalausweises). Mit der Eingabe der Identitätsdaten wird ein Besucher für ein Ereignis registriert.

Die Eingabe der Identitätsdaten erfolgt üblicherweise mit einer Tatstatur, einer Maus, über einen Touchscreen und/oder ein Mikrofon. Die Eingabe erfolgt üblicherweise an einem Computer, der von dem Besucher genutzt wird. Bei dem Computer kann es sich auch um ein Terminal handeln.

Um die Identitätsdaten der Besucher zu sichern, erfolgen die Eingaben in einem geschützten Bereich, zum Beispiel unter Verwendung eines sicheren Hypertext-Übertragungsprotokolls (https, engl. *hypertext transfer protocol secure*)*.* Es ist denkbar, dass der Besucher zunächst eine E-Mail mit einem Link zu einer Webseite erhält. In einem ersten Schritt wird der Besucher gebeten, sich durch die Eingabe seines Namens, seiner E-Mail-Adresse und der Vergabe eines Passworts zu registrieren. Die Registrierungseinheit kann so konfiguriert sein, dass sie dem Besucher in einem nächsten Schritt eine E-Mail mit einem weiteren Link schickt, mit dem der Besucher durch Anklicken den Registrierungsprozess abschließt. Der Besucher kann sich nun auf der Webseite einloggen und die geforderten Identitätsdaten eingeben.

Es ist denkbar, dass die Registrierungseinheit oder die Verwaltungseinheit den durch den Besucher eingegebenen Namen und die durch den Besucher eingegebene E-Mail-Adresse mit den entsprechenden Daten aus dem Planungsdatensatz abgleicht, um zu verhindern, dass sich Besucher zu einem Ereignis registrieren, zu dem sie nicht als Teilnehmer vorgesehen sind.

Vorzugsweise werden die Identitätsdaten und die Planungsdaten zusammen als Ereignisdatensatz in einem Datenspeicher, auf den die Verwaltungseinheit zugreifen kann, gespeichert.

Der Ereignisdatensatz steht ferner der Besucherempfangseinheit zur Verfügung. Es ist denkbar, dass die Besucherempfangseinheit auf den Datenspeicher, auf den die Registrierungseinheit oder die Verwaltungseinheit den Ereignisdatensatz gespeichert hat, zugreifen kann; denkbar ist aber auch, dass der Ereignisdatensatz von der Registrierungseinheit oder der Verwaltungseinheit an die Besucherempfangseinheit übermittelt wird.

Bei der Besucherempfangseinheit handelt es sich üblicherweise um einen Computer, der als Terminal ausgeführt ist oder ein Terminal umfasst. Ein "Terminal" ist ein Endgerät zur Eingabe und Anzeige von Daten. Auch der Begriff "Kiosk" ist für eine solche Besucherempfangseinheit ein geläufiger Begriff.

Es ist denkbar, dass das erfindungsgemäße System über mehrere Besucherempfangseinheiten verfügt, die zum Beispiel an verschiedenen Zutrittsmöglichkeiten zu einem oder mehreren geschützten Bereichen stationiert sind.

Die Besucherempfangseinheit ist diejenige Station, die ein Besucher bei seinem Besuch aufsuchen muss, um Zugang zu einem geschützten Bereich zu erhalten, in dem das Ereignis stattfindet. Die Besucherempfangseinheit führt eine automatisierte Identifizierung und Authentifizierung des Besuchers durch. Ferner prüft sie, ob es sich bei dem Besucher um einen registrierten Besucher handelt. Um diese Funktionen auszuführen, empfängt die Besucherempfangseinheit Daten von dem Besucher. Vorzugsweise weist die Besucherempfangseinheit eine Ausweisleseeinheit auf. Derartige Ausweiseleseeinheiten werden unter anderem auch in Check-in-Automaten auf Flughäfen eingesetzt. Der Besucher legt seinen Personalausweis oder Reisepass mit der Seite der personenbezogenen Daten nach unten auf ein Sichtfenster. Eine Kamera oder ein Scanner erzeugt eine digitale Bildaufnahme von der aufgelegten Seite des Ausweises. Eine Texterkennungssoftware (*optical character recognition*) extrahiert den Vor- und den Nachnamen, das Geburtsdatum, den Geburtsort und/oder das Geschlecht. Damit "weiß" die Besucherempfangseinheit, wer der Besucher ist (Identifikation).

In einem weiteren Schritt erfolgt die Überprüfung, ob der identifizierte Besucher für ein Ereignis registriert ist. Dazu werden die aus dem Ausweis ausgelesenen Daten mit einem oder mehreren Ereignisdatensätzen verglichen. Vorzugsweise erfolgt zunächst oder ausschließlich ein Vergleich mit Ereignisdatensätzen von Ereignissen, die für den aktuellen Tag geplant sind, also für den Tag, an dem der Besucher die Besucherempfangseinheit aufsucht. Findet an dem Tag, an dem der Besucher die Besucherempfangseinheit aufsucht, kein Ereignis statt, zu dem der Besucher registriert ist, so kann die Besucherempfangseinheit eine Mitteilung gegenüber dem Besucher ausgeben, dass dieser für kein Ereignis an dem jeweiligen Tag registriert ist. Es ist auch denkbar, dass der Besucher für ein Ereignis registriert ist, dass dieses Ereignis jedoch abgesagt worden ist, zum Beispiel weil der Einladende erkrankt ist. Die Absage eines Ereignisses kann beispielsweise über die Planungseinheit erfolgen. Der Einladende kann beispielsweise einen Eintrag in einem Kalender zu einem Ereignis löschen oder den Teilnehmer eine elektronische Mitteilung übermitteln, dass das Ereignis nicht stattfindet. In einem solchen Fall kann eine Mitteilung über die Absage des Ereignisses automatisiert an die Besucherempfangseinheit übermittelt werden.

In einem weiteren Schritt wird geprüft, ob es sich bei dem Besucher tatsächlich um die Person handelt, die er anhand des Ausweises vorgibt zu sein (Authentifikation). Dazu wird vorzugsweise mit einer ersten Kamera eine erste digitale Bildaufnahme des Fotos in dem Ausweis (Passfoto) erstellt. Eine Bildanalysesoftware extrahiert aus der ersten digitalen Bildaufnahme biometrische Merkmale (erster Biometriedatensatz). Zusätzlich erzeugt eine zweite Kamera eine zweite digitale Bildaufnahme des Gesichts des Besuchers. Auch diese zweite digitale Bildaufnahme wird analysiert und es werden biometrische Merkmale extrahiert (zweiter Biometriedatensatz). Die biometrischen Merkmale der ersten und der zweiten digitalen Bildaufnahme werden verglichen. Liegt die Übereinstimmung oberhalb eines definierten Schwellenwertes, kann mit einer berechenbaren Wahrscheinlichkeit davon ausgegangen werden, dass es sich bei dem Besucher um diejenige Person handelt, die in dem Ausweis spezifiziert ist. Über den Schwellenwert lässt sich die Wahrscheinlichkeit anpassen.

Nur dann, wenn die Authentizität des Besuchers bestätigt ist und er für ein Ereignis registriert ist, das für den aktuellen Tag geplant ist und nicht abgesagt worden ist, erhält er eine Zutrittsberechtigung. Die Zutrittsberechtigung kann dem Besucher gegenüber angezeigt werden, zum Beispiel durch ein grünes Lämpchen, einen Signalton, eine Sprachnachricht und/oder dergleichen. Vorzugsweise gilt die Zutrittsberechtigung für eine definierte Zeitspanne. Ist diese Zeitspanne verstrichen, kann der Besucher den geschützten Bereich nicht mehr betreten. Ferner ist denkbar, dass der Besucher den geschützten Bereich nicht mehr alleine verlassen kann, wenn die Zeitspanne verstrichen ist.

Es ist denkbar, dass auf einem Bildschirm der Besucherempfangseinheit der Ereignisort (ggf. zusammen mit dem Ort der Besucherempfangseinheit) auf einem Lageplan angezeigt wird, so dass der Besucher weiß, wo das Ereignis stattfindet und wie er dorthin gelangen kann. Es ist denkbar, dass sich der Besucher einen entsprechenden Lageplan ggf. mit einer Routenbeschreibung ausdrucken kann.

Es ist denkbar, dass sich die Besucherempfangseinheit unmittelbar an einer Zutrittsmöglichkeit zum geschützten Bereich befindet. Es ist denkbar, dass sich eine Barriere (Tür, Schranke oder dergleichen) zum geschützten Bereich öffnet, sobald der Besucher eine Zutrittsberechtigung erhalten hat.

Vorzugsweise befindet sich die Besucherempfangseinheit jedoch nicht unmittelbar an einer Zutrittsmöglichkeit sondern in einer gewissen Entfernung zu einer Zutrittsmöglichkeit. Der Prozess der Identifizierung, Authentifizierung und Prüfung auf eine vorliegende Registrierung ist zwar infolge der vorliegenden Erfindung vergleichsweise kurz, er nimmt aber dennoch eine gewisse Zeit in Anspruch. Um die Bildung von Menschenschlangen vor einer Zutrittsmöglichkeit zu verhindern, ist die mindestens eine Besucherempfangseinheit in einer bevorzugten Ausführungsform örtlich von der mindesteins einen Zutrittsmöglichkeit zum geschützten Bereich getrennt, d.h. der Abstand zwischen der mindesten einen Besucherempfangseinheit und der mindestens einen Zutrittsmöglichkeit beträgt mindestens 10 Meter, vorzugsweise mindestens 20 Meter. Vorzugsweise befindet sich eine Mehrzahl an Besucherempfangseinheit in einem ansprechend gestalteten Raum (z.B. einer Empfangshalle), die mit Sitzmöglichkeiten, Getränkeautomaten und/oder dergleichen ausgestattet ist.

Die örtliche Trennung von Besucherempfangseinheit und Zutrittsmöglichkeit kann eine Zutrittskontrolleinheit erforderlich machen, mit der nach der Zutrittsfreigabe durch die Besucherempfangseinheit und vor dem eigentlichen Betreten des geschützten Bereichs noch einmal geprüft wird, ob für die Person, die dabei ist, den geschützten Bereich zu betreten, eine Zutrittsfreigabe vorliegt.

Es ist denkbar, dass der Besucher von der Besucherempfangseinheit im Rahmen der Erteilung einer Zutrittsberechtigung ein Ticket erhält, das ihm den Zugang zum geschützten Bereich ermöglicht. Es ist denkbar, dass das Ticket einen Code umfasst, der gegenüber einer Zutrittskontrolleinheit präsentiert werden muss, um die Zutrittskontrolleinheit passieren zu können. Vorzugsweise berechtigt der Code den Besucher zum Eintritt in den geschützten Bereich (und ggf. auch zum Verlassen des geschützten Bereichs) innerhalb einer definierten Zeitspanne. Ist diese Zeitspanne verstrichen, erhält ein Besucher keinen Zutritt mehr zum geschützten Bereich. Es ist denkbar, dass es sich bei dem Ticket um ein Kärtchen oder ein Stück Papier handelt, auf dem ein optisch lesbarer Code (z.B. ein Strichcode oder ein 2D-Code (Matrixcode)) aufgedruckt ist. Es ist aber auch denkbar, dass es sich bei dem Ticket um eine Chipkarte oder ein Token handelt, bei der/dem der Code in einem elektronischen Speicher abgelegt ist. Ferner ist denkbar, dass das Ticket als Besucherausweis ausgeführt ist, bei dem zum Beispiel der Name des Besuchers, ein Lichtbild des Besuchers, der Ereignistag, die Ereignisanfangszeit, das Ereignisende, der Ereignisort und/oder weitere/andere Angaben in einer Weise vorhanden sind (zum Beispiel in Textform aufgedruckt), die eine Prüfung des Ausweises durch einen Menschen (z.B. Werksdienst) ermöglicht.

Die Zutrittskontrolleinheit kann über ein entsprechendes Lesegerät (Strichcode-Scanner, Kamera, Chipkarten-Lesegerät oder dergleichen) verfügen, mit dem der Code ausgelesen und die Berechtigung zum Betreten des geschützten Bereichs (und ggf. zum Verlassen) geprüft wird.

Vorzugsweise ist das erfindungsgemäße System jedoch so ausgebildet, dass kein Ticket erzeugt wird; stattdessen wird dem Besucher lediglich signalisiert, dass er eine Zutrittsberechtigung für den geschützten Bereich hat. Die vorliegende Erfindung kommt also vollständig ohne Besucherausweis aus und hat damit ökologische und ökonomische Vorteile.

In einer bevorzugten Ausführungsform erfolgt die nachfolgende Zutrittskontrolle automatisiert. Von der Besucherempfangseinheit für jeden Besucher ein Freigabedatensatz erzeugt, der an die Zutrittskontrolleinheit übermittelt wird. Falls es mehrere Zutrittsmöglichkeiten gibt, durch die ein Besucher den geschützten Bereich betreten kann und darf, erfolgt die Übermittlung des Freigabedatensatzes an alle Zutrittskontrolleinheiten, die den Zutritt an einer Zutrittsmöglichkeit kontrollieren (regeln). Der Freigabedatensatz umfasst biometrische Daten des Besuchers sowie Informationen über eine Zeitspanne, für die eine Freigabe vorliegt. Die biometrischen Daten werden vorzugsweise aus dem zweiten Biometriedatensatz, der durch die Besucherempfangseinheit erzeugt worden ist, erzeugt oder entsprechen diesem. Die Zutrittskontrolleinheit verfügt über eine Bildaufnahmeeinheit (Kamera) mit der digitale Bildaufnahmen von Personen, die sich einer Zutrittsmöglichkeit (und damit einer Zutrittskontrolleinheit) nähern, erzeugt werden. Die Zutrittskontrolleinheit ist konfiguriert, die digitalen Bildaufnahmen zu analysieren. Eine Gesichtserkennungssoftware erkennt das Vorliegen von einem oder mehreren Gesichtern in den digitalen Bildaufnahmen. Eine Bildanalysesoftware erzeugt einen dritten Biometriedatensatz von dem mindestens einen Gesicht in einer digitalen Bildaufnahme. Der dritte Biometriedatensatz wird mit den biometrischen Daten der vorliegenden Freigabedatensätze verglichen. Gibt es in den Freigabedatensätzen biometrische Daten, die mit einer definierten Mindestwahrscheinlichkeit mit dem dritten Biometriedatensatz übereinstimmen, dann liegt für die Person, von der die digitale Bildaufnahme des Gesichts erzeugt worden ist, eine Freigabe vor und die sich auf die Zutrittsmöglichkeit zubewegende Person wird durchgelassen. Gibt es in den Freigabedatensätzen keine biometrische Daten, die mit einer definierten Mindestwahrscheinlichkeit mit dem dritten Biometriedatensatz übereinstimmen, dann liegt für die Person, von der die digitale Bildaufnahme des Gesichts erzeugt worden ist, keine Freigabe vor und es werden Maßnahmen ergriffen, um der Person den Zutritt zum geschützten Bereich zu verwehren. Es ist beispielsweise denkbar, den Zutritt durch eine Schranke oder ein Drehkreuz oder eine Tür oder eine andere Vereinzelungsanlage (in dieser Beschreibung allgemein als Barriere bezeichnet) zu kontrollieren. Die Barriere öffnet sich nur für Personen bzw. bleibt nur für Personen geöffnet, für die eine Freigabe vorliegt.

Vorzugsweise ist die mindestens eine Zutrittsmöglichkeit zumindest während einer Zeitspanne, in der mit Besuchen zu rechnen ist (z.B. während einer Besuchszeit, Betriebszeit, Öffnungszeit oder dergleichen), die Zutrittsmöglichkeit nicht durch eine Barriere verschlossen. Eine barrierefreie Zutrittsmöglichkeit hat eine positive Wirkung auf Besucher; sie vermittelt Offenheit. Stattdessen werden die von der Zutrittskontrolleinheit erzeugten und analysierten digitalen Bildaufnahmen auf einem oder mehreren Monitoren angezeigt, die von einem Wachdienst kontrolliert werden. Dabei kann sich das Wachpersonal in einem Raum befindet, der für die Besucher nicht einsehbar ist, so dass die Besucher von dem Wachpersonal keine Notiz nehmen. Es ist denkbar, dass für Personen, die sich der Zutrittsmöglichkeit nähern, auf dem mindestens einen Monitor angezeigt wird, ob für sie eine Zutrittsfreigabe vorliegt oder nicht. Dies kann beispielsweise mittels einer Markierung wie beispielsweise mit einem Rahmen um das Gesicht des Besuchers in einer oder mehreren digitalen Bildaufnahmen erfolgen. Zum Beispiel können die Gesichter von Personen, für die eine Freigabe vorliegt, grün umrahmt sein, während Gesichter von Personen, für die keine Freigabe vorliegt, rot umrahmt sein können. Nur im Falle einer Person mit einer roten Umrahmung des Gesichts (bzw. einer anderen entsprechenden Markierung) tritt das Wachpersonal in Erscheinung und führt eine weitergehende Prüfung (z.B. der Personalien) der Person durch. Alle Personen mit eine grünen Umrahmung des Gesichts (bzw. einer anderen entsprechenden Markierung) können ungehindert den geschützten Bereich über die Zutrittsmöglichkeit betreten.

Es ist denkbar, dass eine weitere Kamera im Zutrittsbereich vorhanden ist, die eine digitale Bildaufnahme von dem Gesicht einer Person erzeugt, die den geschützten Bereich wieder verlässt/ verlassen will. Eine Bildanalysesoftware ermittelt anhand des abgebildeten Gesichts wiederum biometrische Merkmale (vierter Biometriedatensatz). Mittels Vergleich des vierten Biometriedatensatzes mit dem zweiten und/oder dritten Biometriedatensatz wird der zu der Person zugehörige Freigabedatensatz identifiziert und die Person wird "abgemeldet", d.h. es wird vermerkt, dass die Person den geschützten Bereich wieder verlassen hat.

In einer Ausführungsform der vorliegenden Erfindung umfasst das erfindungsgemäße System eine An-/Abwesenheitsermittlungseinheit. In einer bevorzugten Ausführungsform ist diese An-/Abwesenheitsermittlungseinheit konfiguriert, eine Kommunikation mit einem Mobiltelefon eines Besuchers aufzunehmen, um zu prüfen, ob sich der Besucher noch in dem geschützten Bereich aufhält oder den geschützten Bereich bereits verlassen hat. Es ist beispielsweise denkbar, dass die An-/Abwesenheitsermittlungseinheit eine so genannte stille SMS (engl. auch *stealth ping, silent SMS* oder *Short Message Type 0*) versendet. Mobiltelefone in Reichweite der An-/Abwesenheitsermittlungseinheit versenden daraufhin eine automatische Antwort-SMS, aus der auf die Anwesenheit der Mobiltelefone in Reichweite der An-/Abwesenheitsermittlungseinheit geschlossen werden kann. Durch die Verwendung von mehreren An-/Abwesenheitsermittlungseinheiten und der Einstellung definierter Reichweiten können die An-/Abwesenheitsermittlungseinheiten von Mobiltelefonen im geschützten Bereich ermittelt werden.

Es ist beispielsweise denkbar, eine An-/Abwesenheitsermittlungseinheit an einer Zutrittsmöglichkeit mit einer geringen Reichweite im Bereich von 1 bis 20 Metern zu verwenden. Diese versendet in definierten Zeitabschnitten (z.B. alle 10 Sekunden) stille SMS-Nachrichten. Wenn sich ein Besucher mit einem Mobiltelefon der An-/Abwesenheitsermittlungseinheit nähert, empfängt das Mobiltelefon des Besuchers die stille SMS und sendet eine Antwort-SMS, wobei die Antwort SMS die SIM-Nummer des Mobiltelefons umfasst. Diese SIM-Nummer wird zusammen mit dem Zeitpunkt, zu dem sie ermittelt worden ist, gespeichert. Die An-/Abwesenheitsermittlungseinheit "weiß" nun, welches Mobiltelefon in den geschützten Bereich eingebracht worden ist. Es ist denkbar, die Information zum Mobiltelefon mit Informationen zum Besucher (zum Beispiel mit dem dritten Biometriedatensatz) zu verknüpfen. Beim Verlassen des geschützten Bereichs empfängt das Mobiltelefon erneut eine stille SMS und teilt daraufhin erneut seine SIM-Nummern mit. Die An-/Abwesenheitsermittlungseinheit registriert nun für das Mobiltelefon, dass dieses den geschützten Bereich wieder verlassen haben.

In einer Ausführungsform der vorliegenden Erfindung umfasst das erfindungsgemäße System eine Routenplanungseinheit. Eine solche Routenplanungseinheit kann verwendet werden, um die Routen eines oder mehrerer Besucher von einer Besucherempfangseinheit zu einem Ereignisort zu planen. Es ist beispielsweise denkbar, dass ein Unternehmen über einen zentralen Besucherempfang verfügt, von dem aus Besucher zum Beispiel durch einen Fahrdienst zu einem Ereignisort gebracht werden und ggf. von diesem auch wieder abgeholt und zurück zum Besucherempfang gebracht werden. Da ein Unternehmen üblicherweise eine Vielzahl an Besuchern empfängt, die zu unterschiedlichen Ereignisorten gebracht werden müssen, ist es notwendig, die Fahrten und Routen vorab zu planen, um einen schnellen und reibungslosen Transport der Besucher zu den jeweiligen Ereignisorten zu gewährleisten.

Die Routenplanungseinheit ist üblicherweise ein Computer, der mittels eines Computerprogramms konfiguriert ist, die hier beschriebenen Funktionen auszuführen. Es ist auch denkbar, dass die Routenplanungseinheit und die Verwaltungseinheit eine integrierte Einheit bilden. Ferner ist es denkbar, dass die Verwaltungseinheit eine oder mehrere der nachfolgend beschriebenen Funktionen der Routenplanungseinheit übernimmt.

Die Routenplanungseinheit kann auf die Ereignisdatensätze zugreifen. Es ist denkbar, dass die Ereignisdatensätze von der Registrierungseinheit oder der Verwaltungseinheit an die Routenplanungseinheit übermittelt werden. Denkbar ist auch, dass die Routenplanungseinheit auf eine Datenbank zugreifen kann, in der die Ereignisdatensätze gespeichert sind. Die Ereignisdatensätze umfassen die Informationen, welcher Besucher an welchem Tag zu welcher Uhrzeit an welchem Ereignisort erscheinen soll. Da die Ereignisdatensätze üblicherweise bereits vor dem Tag des jeweiligen Ereignisses erzeugt werden, liegen diese Informationen vor dem Tag des jeweiligen Ereignisses vor und können damit zur Routenplanung verwendet werden. Vorzugsweise werden aus den Ereignisdatensätzen Routendatensätze erzeugt, die einem Fahrdienst übermittelt werden. Vorzugsweise umfassen die Routendatensätze pseudonymisierte Informationen, das heißt, der Fahrdienst erhält lediglich die Information, dass ein oder mehrere Besucher zu einem definierten Zeitpunkt an einem Besucherempfang abgeholt, zu einem definierten Ereignisort gebracht, und von dem definierten Ereignisort zu einem definierten Zeitpunkt wieder abgeholt werden sollen. Der Fahrdienst erhält in einem solchen Fall zum Beispiel aus Gründen des Datenschutzes keine personenbezogenen Daten.

Vorzugsweise besitzt jeder Fahrer des Fahrdienstes einen mobilen Computer wie beispielsweise einen Tablet-Computer oder ein Smartphone oder eine Smartwatch oder einen Handheld-Computer oder dergleichen, der/das die genannten Informationen zu den einzelnen Routen anzeigt.

Vorzugsweise ist der mobile Computer eines Fahrers so konfiguriert, dass der Fahrer die Abholung eines oder mehrerer Besucher an einem Besucherempfang und/oder das Absetzen eines oder mehrerer Besucher an einem Ereignisort und/oder das Abholen eines oder mehrerer Besucher von dem Ereignisort und/oder das Absetzen eines oder mehrerer Besucher an dem Besucherempfang bestätigen kann. Bestätigen bedeutet, dass der Fahrer durch eine Eingabe in den mobilen Computer bestätigt, dass er einen Besucher an einem Ort aufgenommen und/oder einen Besucher an einem Ort abgesetzt hat. Vorzugsweise wird der Zeitpunkt einer solchen Bestätigung erfasst und gespeichert. Vorzugsweise verfügt der mobile Computer über eine Sendeeinheit, die eine solche Bestätigung zusammen mit dem erfassten Zeitpunkt an die Routenplanungseinheit übermittelt. Die gesammelten Daten können zu Optimierung der zukünftigen Routenplanung genutzt werden, denn sie geben an, wie lange einzelne Routen gedauert haben. Denkbar ist auch, dass der Weg einzelner Fahrzeuge z.B. mittels eines Satellitennavigationssystems (GPS) verfolgt wird. Auch diese Daten können zur Optimierung der Routenplanung verwendet werden.

Das vorliegende System ist ein autonom geführtes System zum Empfang von Besuchern und zur Kontrolle des Zutritts der Besucher zu einem geschützten Bereich. Die Schritte des erfindungsgemäßen Verfahrens erfolgen automatisiert, d.h. ohne Eingreifen durch einen Menschen. Die Erfindung ermöglicht eine Besucherverwaltung, die einfach, transparent, schnell, komfortabel und sicher ist.

Die Erfindung wird nachstehend anhand von Figuren näher erläutert, ohne die Erfindung auf die in den Figuren gezeigten Merkmale und Merkmalskombinationen beschränken zu wollen.

Die Bezugszeichen wurden so gewählt, dass sich gleiche Bezugszeichen in verschiedenen Figuren stets auf die gleichen Merkmale (z.B. Komponenten oder Verfahrensschritte) beziehen.

Es zeigen:

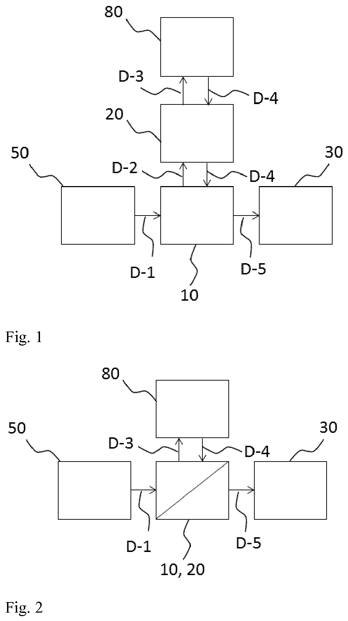

Fig. 1 zeigt schematisch eine bevorzugte Ausführungsform des erfindungsgemäßen Systems. Das System umfasst eine Verwaltungseinheit (10), eine Registrierungseinheit (20), und eine Besucherempfangseinheit (30). In Figur 1 ist ferner eine Planungseinheit (50) dargestellt, die ein optionaler Bestandteil des erfindungsgemäßen Systems ist. In Figur 1 ist ferner ein Computer (80) dargestellt, der von einem Besucher bedient wird. Der Computer (80) ist üblicherweise kein Bestandteil des erfindungsgemäßen Systems. Als Terminal ausgeführt kann der Computer (80) ein Bestandteil des erfindungsgemäßen Systems sein.

Die Planungseinheit (50) wird verwendet, um ein Ereignis zu planen. Üblicherweise liegt eine Vielzahl an Planungseinheiten vor. Zu der Planung eines Ereignisses zählt mindestens die Festlegung eines Ereignisortes, einer Ereignisanfangszeit und eines externen Teilnehmers (Besuchers). Diese Informationen werden in einem Planungsdatensatz D-1 gespeichert.

Die Planungseinheit (50) übermittelt den Planungsdatensatz (D-1) an die Verwaltungseinheit (10). Die Verwaltungseinheit (10) extrahiert aus dem Planungsdatensatz (D-1) Kontaktdaten D-2 des mindestens einen Besuchers und übermittelt die Kontaktdaten an die Registrierungseinheit (20). Die Registrierungseinheit (20) nutzt die Kontaktdaten (D-2), um dem Besucher über den Computer (80) eine Zugangsmöglichkeit (D-3) zu der Registrierungseinheit (20) zu übermitteln. Der Besucher nutzt den Zugang zur Registrierungseinheit (20) und übermittelt Identitätsdaten (D-4) an die Registrierungseinheit (20). Die Identitätsdaten (D-4) umfassen üblicherweise alle Vor- und den Nachnamen und eine Ausweisenummer des Besuchers. Die Registrierungseinheit (20) übermittelt die Identitätsdaten (D-4) an die Verwaltungseinheit (10). Die Verwaltungseinheit (10) erzeugt aus dem Planungsdatensatz (D-1) und den Identitätsdaten (D-4) einen Ereignisdatensatz (D-5) und übermittelt den Ereignisdatensatz (D-5) an die Besucherempfangseinheit (30).

Fig. 2 zeigt schematisch eine weitere bevorzugte Ausführungsform des erfindungsgemäßen Systems. Das System umfasst eine kombinierte Verwaltungs- und Registrierungseinheit (10, 20), und eine Besucherempfangseinheit (30). In Figur 2 ist ferner eine Planungseinheit (50) dargestellt, die ein optionaler Bestandteil des erfindungsgemäßen Systems ist. In Figur 2 ist ferner ein Computer (80) dargestellt, der von einem Besucher bedient wird.

Der Planungsdatensatz (D-1) wird von der Planungseinheit (50) an die kombinierte Verwaltungs- und Registrierungseinheit (10, 20) übermittelt. Die kombinierte Verwaltungs- und Registrierungseinheit (10, 20) extrahiert aus dem Planungsdatensatz (D-1) Kontaktdaten des mindestens einen Besuchers und übermittelt dem Besucher über den Computer (80) eine Zugangsmöglichkeit (D-3) zu der kombinierten Verwaltungs- und Registrierungseinheit (10, 20). Der Besucher nutzt den Zugang und übermittelt über den Computer (80) Identitätsdaten (D-4) an die kombinierte Verwaltungs- und Registrierungseinheit (10, 20). Die kombinierte Verwaltungs- und Registrierungseinheit (10, 20) erzeugt aus dem Planungsdatensatz (D-1) und den Identitätsdaten (D-4) einen Ereignisdatensatz (D-5) und übermittelt diesen an die Besucherempfangseinheit (30).

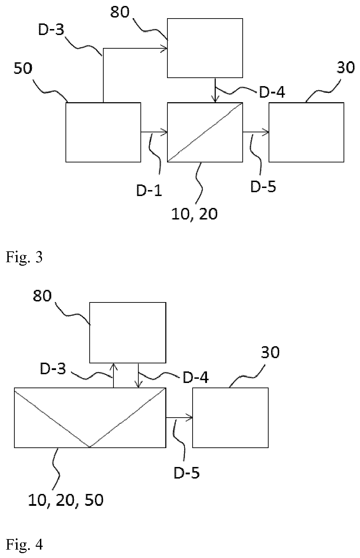

Fig. 3 zeigt schematisch eine weitere bevorzugte Ausführungsform des erfindungsgemäßen Systems. Das System umfasst eine kombinierte Verwaltungs- und Registrierungseinheit (10, 20), und eine Besucherempfangseinheit (30). In Figur 3 ist ferner eine Planungseinheit (50) dargestellt, die ein optionaler Bestandteil des erfindungsgemäßen Systems ist. In Figur 3 ist ferner ein Computer (80) dargestellt, der von einem Besucher bedient wird.

Die Planungseinheit (50) wird verwendet, um ein Ereignis zu planen. Zu der Planung zählen mindestens die Festlegung eines Ereignisortes, einer Ereignisanfangszeit und eines externen Teilnehmers (Besuchers). Diese Informationen werden in einem Planungsdatensatz D-1 gespeichert. Die Planungseinheit (50) übermittelt den Planungsdatensatz (D-1) an die kombinierte Verwaltungs- und Registrierungseinheit (10, 20). Ferner übermittelt die Planungseinheit (50) dem mindestens einen Besucher über den Computer (80) eine Zugangsmöglichkeit (D-3) zu der kombinierten Verwaltungs- und Registrierungseinheit (10, 20). Der Besucher nutzt den Zugang und übermittelt Identitätsdaten (D-4) über den Computer (80) an die kombinierte Verwaltungs- und Registrierungseinheit (10, 20). Die kombinierte Verwaltungs- und Registrierungseinheit (10, 20) erzeugt aus dem Planungsdatensatz (D-1) und den Identitätsdaten (D-4) einen Ereignisdatensatz (D-5) und übermittelt diesen an die Besucherempfangseinheit (30).

Fig. 4 zeigt schematisch eine weitere bevorzugte Ausführungsform des erfindungsgemäßen Systems. Das System umfasst eine kombinierte Planungs-, Verwaltungs- und Registrierungseinheit (50, 10, 20), und eine Besucherempfangseinheit (30). In Figur 4 ist ferner ein Computer (80) dargestellt, der von einem Besucher bedient wird. Die kombinierte Planungs-, Verwaltungs- und Registrierungseinheit (50, 10, 20) wird verwendet, um ein Ereignis zu planen. Zu der Planung zählen mindestens die Festlegung eines Ereignisortes, einer Ereignisanfangszeit und eines externen Teilnehmers (Besuchers). Die kombinierte Planungs-, Verwaltungs- und Registrierungseinheit (50, 10, 20) übermittelt dem mindestens einen Besucher über den Computer (80) eine Zugangsmöglichkeit (D-3) zu der kombinierten Planungs-, Verwaltungs- und Registrierungseinheit (50, 10, 20). Der Besucher nutzt den Zugang und übermittelt Identitätsdaten (D-4) über den Computer (80) an die kombinierte Planungs-, Verwaltungs- und Registrierungseinheit (50, 10, 20). Die kombinierte Planungs-, Verwaltungs- und Registrierungseinheit (50, 10, 20) erzeugt aus den Informationen zum Ereignis (Ereignisort, Ereigniszeit, Besucher) und den Identitätsdaten (D-4) einen Ereignisdatensatz (D-5) und übermittelt diesen an die Besucherempfangseinheit (30).

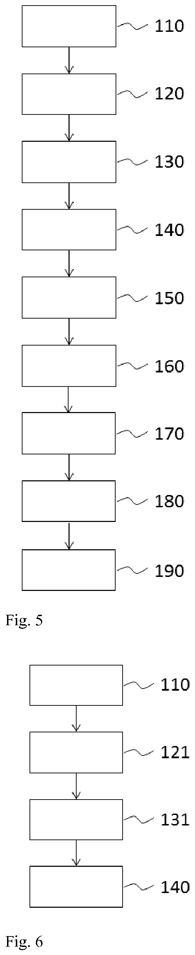

Fig. 5 zeigt eine bevorzugte Ausführungsform des erfindungsgemäßen Verfahrens in einem Ablaufdiagramm.

Das Verfahren umfasst die Schritte:
- Extrahieren von Ereignisinformationen aus einem Planungsdatensatz, wobei die Ereignisinformationen Informationen zu einem Ereignis und Kontaktdaten eines Besuchers umfassen (110),
- Übermitteln einer elektronischen Mitteilung an den Besucher, wobei die Mitteilung dem Besucher einen Zugang zu einer Registrierungseinheit verschafft (120),
- Empfangen von Identitätsdaten des Besuchers über den Zugang zu der Registrierungseinheit (130),
- Erzeugen eines Ereignisdatensatzes auf Basis des Planungsdatensatzes und der vom Besucher übermittelten Identitätsdaten (140),
- Übermitteln des Ereignisdatensatzes an eine Besucherempfangseinheit (150),
- Identifizieren des Besuchers am Tag des Ereignisses (160),
- Authentifizieren des Besuchers am Tag des Ereignisses (170),
- Prüfen, ob der Besucher für das Ereignis registriert ist (180),
- Erteilen einer Zutrittsfreigabe für den Fall, dass der Besucher registriert ist und dass das Ereignis stattfindet (190).

Fig. 6 zeigt eine bevorzugte Ausführungsform der Schritte (110) bis (140) in einem Ablaufdiagramm.

Die Schritte sind:
- Extrahieren von Ereignisinformationen aus einem Planungsdatensatz, wobei die Ereignisinformationen Informationen zu einem Ereignis und Kontaktdaten eines Besuchers umfassen (110),
- Übermitteln einer elektronischen Mitteilung an den Besucher, wobei die Mitteilung einen Weblink zu einem Webportal umfasst, wobei der Besucher über das Webportal Zugang zu einer Registrierungseinheit erhält (121),
- Empfangen von ersten Identitätsdaten des Besuchers über das Webportal (131),
- Erzeugen eines Ereignisdatensatzes auf Basis des Planungsdatensatzes und der vom Besucher übermittelten ersten Identitätsdaten (140).

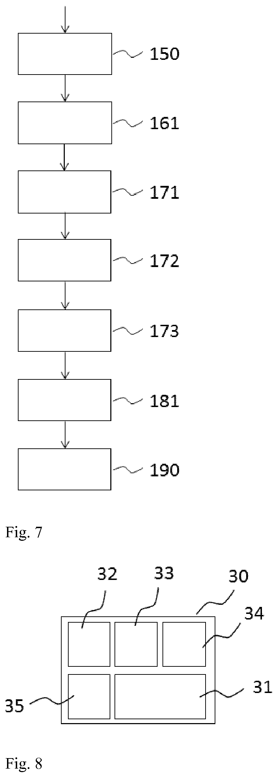

Fig. 7 zeigt eine bevorzugte Ausführungsform der Schritte (150) bis (190) in einem Ablaufdiagramm.

Die Schritte sind:
- Übermitteln des Ereignisdatensatzes an eine Besucherempfangseinheit (150),
- Identifizieren des Besuchers durch Extrahieren von zweiten Identitätsdaten des Besuchers aus einem Ausweis des Besuchers (161),
- Erzeugen einer digitalen Bildaufnahme eines in dem Ausweis des Besuchers befindlichen Lichtbildes und Erzeugen eines ersten Biometriedatensatzes (171),
- Erzeugen einer digitalen Bildaufnahme des Gesichts des Besuchers und Erzeugen eines zweiten Biometriedatensatzes (172),
- Authentifizieren des Besuchers durch Vergleichen des ersten und des zweiten Biometriedatensatzes (173),
- Prüfen, ob der Besucher für ein Ereignis an dem Tag registriert ist durch Vergleichen der zweiten Identitätsdaten mit ersten Identitätsdaten, die in Ereignisdatensätzen enthalten sind (181),
- Erteilen einer Zutrittsfreigabe für den Fall, dass der Besucher registriert ist und dass das Ereignis an dem Tag stattfindet (190).

Fig. 8 zeigt schematisch eine bevorzugte Ausführungsform der Besucherempfangseinheit (30). Die Besucherempfangseinheit (30) umfasst eine Steuer- und Recheneinheit (31), eine Ausweisleseeinheit (32), eine Bildaufnahmeeinheit (33), eine Ein-/Ausgabeeinheit (34) und einen Datenspeicher (35). Mit der Ausweisleseeinheit (32) werden Identitätsdaten aus dem Ausweis eines Besuchers ausgelesen. Mit der Bildaufnahmeeinheit (33) wird eine digitale Bildaufnahme von dem Gesicht des Besuchers erzeugt. Über die Ein-/Ausgabeeinheit (34) kann der Besucher mit der Besucherempfangseinheit (30) kommunizieren. In dem Datenspeicher (35) sind eine Mehrzahl an Ereignisdatensätzen für eine Mehrzahl an Ereignissen gespeichert. Die Steuer- und Recheneinheit (31) dient der Steuerung der genannten Einheiten, der Koordinierung der Datenflüsse zwischen verschiedenen Einheiten, der Erzeugung von Biometriedatensätzen und dem Vergleich von Biometriedatensätzen.

Bei den in den Figuren 1, 2, 3, 4, 12 und 13 dargestellten Besucherempfangseinheiten (30) kann es sich um die in Fig. 8 gezeigte bevorzugte Ausführungsform einer Besucherempfangseinheit handeln.

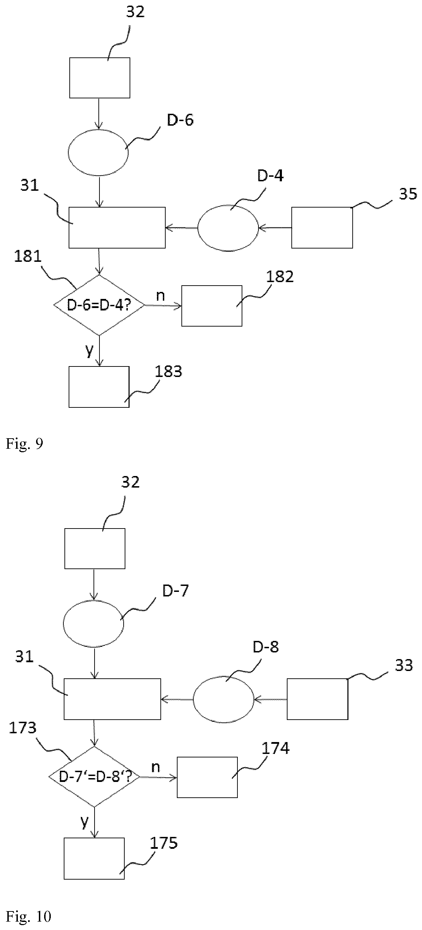

Fig. 9 zeigt schematisch ein Beispiel für die Datenflüsse bei der Identifizierung eines Besuchers am Tag eines Ereignisses und der Prüfung, ob der Besucher für ein Ereignis registriert ist.

Der Besucher wird aufgefordert, seinen Ausweis gegenüber einer Ausweisleseeinheit (32) der Besucherempfangseinheit zu präsentieren. Die Ausweisleseeinheit (32) extrahiert zweite Identitätsdaten (D-6) aus dem Ausweis und übermittelt sie an die eine Steuer- und Recheneinheit (31) der Besucherempfangseinheit. Damit "weiß" die Besucherempfangseinheit, wer der Besucher ist (bzw. wer er vorgibt zu sein).

In einem Datenspeicher (35) der Besucherempfangseinheit sind Ereignisdatensätze gespeichert. Die Ereignisdatensätze umfassen erste Identitätsdaten (D-4) von registrierten Besuchern.

In einem nächsten Schritt (181) werden die zweiten Identitätsdaten (D-6) mit den ersten Identitätsdaten (D-4) verglichen. Gibt es in den Ereignisdatensätzen erste Identitätsdaten, die mit den zweiten Identitätsdaten übereinstimmen ("y"), so ist der Besucher für das entsprechende Ereignis registriert. Der Besucher ist also identifiziert und seine Registrierung bestätigt (183). Gibt es in den Ereignisdatensätzen keine ersten Identitätsdaten, die mit den zweiten Identitätsdaten übereinstimmen ("n"), ist der Besucher entweder nicht registriert oder das Ereignis findet nicht statt. In einem solchen Fall kann dem Besucher eine entsprechende Mitteilung angezeigt werden (182).

Fig. 10 zeigt schematisch ein Beispiel für die Datenflüsse bei der Authentifizierung eines Besuchers am Tag eines Ereignisses.

Der Besucher wird aufgefordert seinen Ausweis gegenüber einer Ausweisleseeinheit (32) der Besucherempfangseinheit zu präsentieren. Die Ausweisleseeinheit (32) erzeugt eine erste digitale Bildaufnahme (D-7) von dem in dem Ausweis befindlichen Lichtbild des Besuchers und übermittelt sie an die eine Steuer- und Recheneinheit (31) der Besucherempfangseinheit.

Die zur Besucherempfangseinheit zugehörige Bildaufnahmeeinheit (33) erzeugt eine zweite digitale Bildaufnahme (D-8) von dem Gesicht des Besuchers und übermittelt diese ebenfalls an die Steuer- und Recheneinheit (31). Die Steuer- und Recheneinheit (31) vergleicht die Bildaufnahmen miteinander. Dabei werden üblicherweise nicht die Bildaufnahmen direkt miteinander vergleichen, sondern aus den Bildaufnahmen werden zunächst biometrische Daten erzeugt. Aus der ersten digitalen Bildaufnahme (D-7) wird ein erster Biometriedatensatz (D-7') erzeugt. Aus der zweiten digitalen Bildaufnahme (D-8) wird ein zweiter Biometriedatensatz (D-8') erzeugt. Die Biometriedatensätze werden in einem anschließenden Schritt (173) miteinander verglichen (D-7'=D-8'?). Liegt die Übereinstimmung oberhalb eines Schwellenwertes ("y"), so ist der Besucher authentifiziert (175); er ist mit einer definierten Wahrscheinlichkeit derjenige, der er vorgibt zu sein. Liegt die Übereinstimmung nicht oberhalb eines Schwellenwertes ("n"), so konnte der Besucher nicht authentifiziert werden. In einem solchen Fall kann ein Wachpersonal eine weitergehende Prüfung vornehmen (Schritt 174).

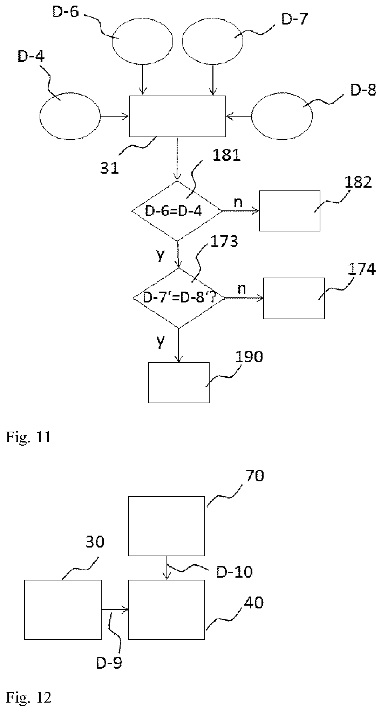

Fig. 11 zeigt schematisch in einem Ablaufdiagramm eine Ausführungsform für die Erteilung einer Zutrittsfreigabe durch die Besucherempfangseinheit. Figur 11 zeigt eine bevorzugte Kombination der in den Figuren 9 und 10 gezeigten Schritte. Es wird zunächst geprüft, ob der Besucher registriert ist (181). Dann wird die Authentizität des Besuchers geprüft (173). Nur dann, wenn der Besucher identifiziert, authentifiziert und registriert ist, wird eine Zutrittsfreigabe erteilt (190).

Fig. 12 zeigt schematisch drei Einheiten des erfindungsgemäßen Systems. Gezeigt werden die Besucherempfangseinheit (30), eine Zutrittskontrolleinheit (40) und eine Bildaufnahmeeinheit (70), die ein Bestandteil der Zutrittskontrolleinheit (40) sein kann. Die in Figur 12 gezeigten Einheiten können mit den in den Figuren 1, 2, 3 und 4 gezeigten Einheiten kombiniert werden. Die Besucherempfangseinheit ist konfiguriert, einen Freigabedatensatz (D-9) an die Zutrittskontrolleinheit (40) zu übermitteln. Der Freigabedatensatz (D-9) umfasst den zweiten Biometriedatensatz (D-8') (siehe Figs. 10, 11). Die Bildaufnahmeeinheit (70) ist konfiguriert, eine digitale Bildaufnahme, auf der das Gesicht eines Besuchers zu erkennen ist, zu erzeugen. Die Bildaufnahmeeinheit (70) ist ferner konfiguriert, die digitale Bildaufnahme (D-10) an die Zutrittskontrolleinheit (40) zu übermitteln. Die Zutrittskontrolleinheit (40) ist konfiguriert, einen dritten Biometriedatensatz (D-10') aus der digitalen Bildaufnahme (D-10) zu erzeugen. Denkbar ist auch, dass die Bildaufnahmeeinheit (70) den dritten Biometriedatensatz (D-10') aus der digitalen Bildaufnahme (D-10) erzeugt und an die Zutrittskontrolleinheit (40) übermittelt.

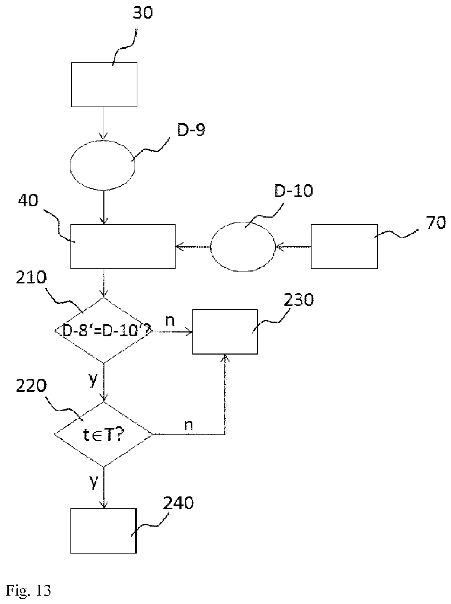

Fig. 13 zeigt schematisch den Datenfluss zwischen den drei in Fig. 12 gezeigten Einheiten des erfindungsgemäßen Systems. Von der Besucherempfangseinheit wird ein Freigabedatensatz (D-9) an die Zutrittskontrolleinheit (40) übermittelt. Der Freigabedatensatz umfasst den zweiten Biometriedatensatz (D-8') sowie eine Information darüber, in welchem Zeitraum der Besucher, von dem der zweite Biometriedatensatz (D-8') stammt, einen geschützten Bereich betreten darf. Nähert sich der Besucher der Bildaufnahmeeinheit (70), so erzeugt diese automatisiert eine oder mehrere digitale Bildaufnahmen (D-10), auf der/denen das Gesicht des Besuchers zu erkennen ist. Die Bildaufnahmeeinheit (70) übermittelt die digitale Bildaufnahme (D-10) an die Zutrittskontrolleinheit (40). Die Zutrittskontrolleinheit (40) erzeugt einen dritten Biometriedatensatz (D-10') aus der digitalen Bildaufnahme (D-10). Denkbar ist auch, dass die Bildaufnahmeeinheit (70) den dritten Biometriedatensatz (D-10') aus der digitalen Bildaufnahme (D-10) erzeugt und an die Zutrittskontrolleinheit (40) übermittelt. Die Zutrittskontrolleinheit (40) vergleicht die Biometriedatensätze (Schritt 210: D-8'=D-10'?). Stimmen sie mit einer definierten Wahrscheinlichkeit überein ("y"), so liegt für den Besucher eine Freigabe vor. In einem nächsten Schritt (220) wird geprüft, ob die Freigabe noch gültig ist; es wird geprüft, ob der aktuelle Zeitpunkt (t) innerhalb der Zeitspanne (T) liegt, für den eine Freigabe erteilt worden ist. Ist die Freigabe noch gültig ("y"), kann der Besucher den geschützten Bereich ungehindert betreten (240). Stimmen die Biometriedatensätze nicht mit einer definierten Wahrscheinlichkeit überein ("n"), oder ist die Freigabe nicht mehr gültig ("n") so wird dem Besucher der Zugang verwehrt (230).

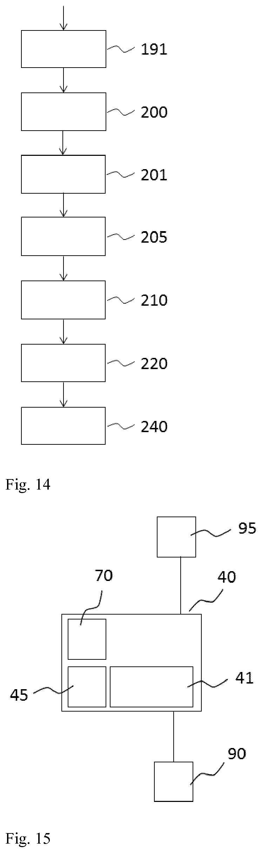

Fig. 14 zeigt schematisch ein Ablaufdiagramm für optionale Schritte des erfindungsgemäßen Verfahrens, die sich an den Schritt "Erteilen einer Zutrittsfreigabe für den Fall, dass der Besucher registriert ist und dass das Ereignis stattfindet (190)" anschließen können.

Die Schritte sind:
- Erzeugen eines Freigabedatensatzes, wobei der Freigabedatensatz Informationen zu dem Zeitraum, in dem der Besucher den geschützten Bereich betreten darf, umfasst, und wobei der Freigabedatensatz den zweiten Biometriedatensatz umfasst (191),
- Übermitteln des Freigabedatensatzes an eine Zutrittskontrolleinheit (200),
- Aufnehmen einer digitalen Bildaufnahme mindestens eines Besuchers, der sich der Zutrittskontrolleinheit nähert (201),
- Erzeugen eines dritten Biometriedatensatzes aus der digitalen Bildaufnahme (205),
- Prüfen, ob für den mindestens einen Besucher eine Freigabe vorliegt durch Vergleichen des dritten Biometriedatensatzes mit dem zweiten Biometriedatensatz (210),
- Prüfen, ob die Freigabe noch gültig ist durch Einordnen der aktuellen Zeit in Bezug auf den Zeitraum, an dem der Besucher den geschützten Bereich betreten darf (220),
- Gewähren eines Zutritts in den geschützten Bereich für den Fall, dass für den mindestens einen Besucher eine gültige Freigabe vorliegt (240).

Fig. 15 zeigt eine bevorzugte Ausführungsform der Zutrittskontrolleinheit (40). Bei den in den Figuren 12, 13 dargestellten Zutrittskontrolleinheiten (40) kann es sich um die in Fig. 15 gezeigte bevorzugte Ausführungsform einer Besucherempfangseinheit handeln. Die Zutrittskontrolleinheit (40) umfasst eine Steuer- und Recheneinheit (41), eine Bildaufnahmeeinheit (70) und einen Datenspeicher (45).

Die Zutrittskontrolleinheit (40) ist mit einem Bildschirm (90) verbunden, auf dem digitale Bildaufnahmen, die von der Bildaufnahmeeinheit (70) aufgenommen werden, angezeigt werden. Vorzugsweise nimmt die Bildaufnahmeeinheit (70) kontinuierlich Bildaufnahmen auf, die als Live-Aufnahmen auf dem Bildschirm (90) angezeigt werden. Vorzugsweise beträgt die Aufnahmefrequenz mindestens 1 Bild / Sekunde.; vorzugsweise ist die Aufnahmefrequenz größer

Die Bildaufnahmen werden von der Steuer- und Recheneinheit (41) analysiert, ob Gesichter enthalten sind. Werden Gesichter in den Bildaufnahmen erkannt, werden von der Steuer- und Recheneinheit (41) biometrische Merkmale aus den abgebildeten Gesichtern extrahiert und für jedes Gesicht jeweils ein dritter Biometriedatensatz erzeugt. Jeder dritte Biometriedatensatz wird von der Steuer- und Recheneinheit (41) mit zweiten Biometriedatensätzen, die von der Besucherempfangseinheit übermittelt wurden und in dem Datenspeicher (45) gespeichert sind, verglichen. Entspricht ein dritter Biometriedatensatz mit einer definierten Übereinstimmung einem zweiten Biometriedatensatz, liegt für den entsprechenden Besucher eine Freigabe zum Zutritt des geschützten Bereichs vor. In dem Datenspeicher (45) ist für jeden freigegebenen Besucher eine Zeitspanne gespeichert, für die er eine Freigabe hat. Von der Steuer- und Recheneinheit (41) wird geprüft, ob die Zeitspanne noch läuft oder ob diese bereits abgelaufen ist. Besucher, für die eine Freigabe vorliegt, die noch nicht erloschen ist (die noch gültig ist), werden auf dem Bildschirm mit einer Markierung versehen. Besucher, für die keine Freigabe vorliegt, oder für die die Freigabe bereits erloschen ist, werden auf dem Bildschirm mit einer anderen Markierung versehen. Anhand der Markierung kann ein Wachpersonal erkennen, ob ein sich der Zutrittskontrolleinheit nähernder Besucher den geschützten Bereich betreten darf oder nicht betreten darf. Besucher, die den geschützten Bereich betreten dürfen, erhalten freien Zutritt; Besucher, die den geschützten Bereich nicht betreten dürfen, werden an einem Zutritt gehindert. Die Zutrittsmöglichkeit ist vorzugsweise barrierefrei.

Die Zutrittskontrolleinheit (40) ist ferner mit einer An-/Abwesenheitsermittlungseinheit (95) verbunden. Hat ein Besucher den geschützten Bereich betreten, sendet die An-/Abwesenheitsermittlungseinheit (95) eine stille SMS aus, die von einem Mobiltelefon des Besuchers empfangen wird. Von dem Mobiltelefon des Besuchers wird als Antwort auf die stille SMS eine SMS zurückgesandt, die die SIM-Nummer des Mobiltelefons umfasst. Die SIM-Nummer wird an die Zutrittskontrolleinheit (40) übermittelt und in dem Datenspeicher (45) gespeichert. Zusätzlich wird in dem Datenspeicher (45) die Information gespeichert, dass sich ein Besucher mit einem Mobiltelefon, das die SIM-Nummer besitzt, in dem geschützten Bereich aufhält. Vorzugsweise wird auch der Zeitpunkt, an dem der Besucher den geschützten Bereich betreten hat, in dem Datenspeicher (45) gespeichert. Nähert sich der Besucher beim Verlassen erneut der Zutrittskontrolleinheit (40) versendet die An-/Abwesenheitsermittlungseinheit (95) erneut eine stille SMS und das Mobiltelefon des Besuchers antwortet erneut mit einer Nachricht, die die SIM-Nummer des Mobiltelefons umfasst. Die SIM-Nummer wird an die Zutrittskontrolleinheit (40) übermittelt und es wird entweder der Eintrag zu der SIM-Nummer in der Datenbank (45) gelöscht oder es wird in der Datenbank (45) die Information gespeichert, dass der Besucher mit dem Mobiltelefon, das die entsprechende SIM-Nummer hat, den geschützten Bereich wieder verlassen hat.

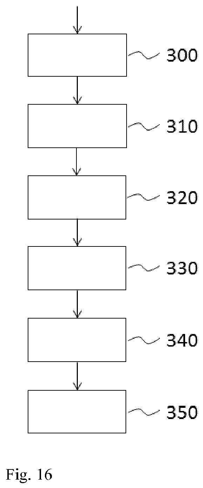

Fig. 16 zeugt schematisch ein Ablaufdiagramm für weitere optionale Schritte des erfindungsgemäßen Verfahrens, die sich an den Schritt "Gewähren eines Zutritts in den geschützten Bereich für den Fall, dass für den mindestens einen Besucher eine gültige Freigabe vorliegt (240)" anschließen können.

Die Schritte sind:
- Versenden einer ersten stillen SMS (300),
- Empfangen einer Antwort auf die erste stille SMS von einem Mobiltelefon, das sich im geschützten Bereich befindet, wobei die Antwort eine SIM-Nummer des Mobiltelefons umfasst (310),
- Speichern der SIM-Nummer in einem Datenspeicher zusammen mit der Information, dass sich ein Besucher mit einem Mobiltelefon mit der entsprechenden SIM-Nummer in dem geschützten Bereich befindet (320),
- Versenden einer zweiten stillen SMS (330),
- Empfangen einer Antwort auf die zweite stille SMS von einem Mobiltelefon, das sich nicht mehr im geschützten Bereich befindet, wobei die Antwort die SIM-Nummer des Mobiltelefons umfasst (340),
- Speichern der SIM-Nummer in einem Datenspeicher zusammen mit der Information, dass sich ein Besucher mit einem Mobiltelefon mit der entsprechenden SIM-Nummer nicht mehr in dem geschützten Bereich befindet, oder Löschen des Eintrags, dass sich ein Besucher mit einem Mobiltelefon mit der entsprechenden SIM-Nummer in dem geschützten Bereich befindet (350).

## Patentansprüche

1. System umfassend
- eine Verwaltungseinheit,
- eine Registrierungseinheit und
- eine Besucherempfangseinheit,
wobei die Verwaltungseinheit konfiguriert ist, aus einer elektronischen Mitteilung gerichtet an Teilnehmer eines Ereignisses mindestens die folgenden Ereignisinformationen zu extrahieren: Ereignisort, Ereignisanfangszeit, Kontaktdaten von Besuchern des Ereignisses,
wobei die Verwaltungseinheit konfiguriert ist, den Besuchern eine elektronische Nachricht zu übermitteln, wobei die elektronische Nachricht den Besuchern einen Zugang zu der Registrierungseinheit ermöglicht,
wobei die Registrierungseinheit konfiguriert ist, von den Besuchern erste Identitätsdaten zu empfangen, und die Besucher für das Ereignis zu registrieren,
wobei die Besucherempfangseinheit konfiguriert ist,
- Daten von den Besuchern an einem Tag, an dem das Ereignis stattfinden soll, zu empfangen,
- anhand der empfangenen Daten die Identität der Besucher festzustellen,
- anhand der empfangenen Daten die Authentizität der Besucher festzustellen,
- zu prüfen, ob das Ereignis stattfindet,
- zu prüfen, ob die Besucher für das Ereignis registriert sind, und
- für den Fall, dass das Ereignis stattfindet, und die Besucher für das Ereignis registriert sind, den registrierten Besuchern eine Zutrittsfreigabe zu erteilen.

2. System gemäß Anspruch 1, wobei die elektronische Nachricht einen Weblink zu einem Webportal umfasst, wobei der Besucher über das Webportal Zugang zu der Registrierungseinheit erhält.

3. System gemäß einem der Ansprüche 1 oder 2,
wobei die Besucherempfangseinheit eine Ausweisleseeinheit umfasst,
wobei die Besucherempfangseinheit konfiguriert ist,
- die Ausweisleseeinheit zu veranlassen, zweite Identitätsdaten aus einem Ausweis eines Besuchers zu extrahieren,
- zu prüfen, ob der Besucher für ein Ereignis registriert ist durch Vergleichen der zweiten Identitätsdaten mit ersten Identitätsdaten.

4. System gemäß einem der Ansprüche 1, 2 oder 3,
wobei die Besucherempfangseinheit eine Ausweisleseeinheit und eine Bildaufnahmeeinheit umfasst, wobei die Besucherempfangseinheit konfiguriert ist,
- die Ausweisleseeinheit zu veranlassen, eine erste digitale Bildaufnahme von einem in dem Ausweis befindlichen Lichtbild des Besuchers zu erzeugen,
- die Bildaufnahmeeinheit zu veranlassen, eine zweite digitale Bildaufnahme von einem Gesicht des Besuchers zu erzeugen,
- aus der ersten digitalen Bildaufnahme einen ersten Biometriedatensatz zu erzeugen,
- aus der zweiten digitalen Bildaufnahme einen zweiten Biometriedatensatz zu erzeugen,
- den ersten und den zweiten Biometriedatensatz zu vergleichen, und
- eine Authentizität des Besuchers festzustellen für den Fall, dass der erste Biometriedatensatz und der zweite Biometriedatensatz mit einer definierten Wahrscheinlichkeit übereinstimmen.

5. System gemäß einem der Ansprüche 1, 2, 3 oder 4, wobei die Verwaltungseinheit konfiguriert ist, automatisch zu erkennen, ob es sich bei einem Teilnehmer des Ereignisses um eine Person handelt, für die keine Registrierung zu dem Ereignis erforderlich ist oder ob es sich um einen Besucher handelt, für den eine Registrierung erforderlich ist.

6. System gemäß einem der Ansprüche 1, 2, 3, 4 oder 5, ferner umfassend eine Zutrittskontrolleinheit, wobei die Besucherempfangseinheit konfiguriert ist,
- für einen identifizierten und authentifizierten Besucher einen Freigabedatensatz zu erzeugen, der den zweiten Biometriedatensatz umfasst,
- den Freigabedatensatz an die Zutrittskontrolleinheit zu übermitteln,
wobei die Zutrittskontrolleinheit eine Bildaufnahmeeinheit umfasst,
wobei die Zutrittskontrolleinheit konfiguriert ist,
- die Bildaufnahmeeinheit zu veranlassen, eine digitale Bildaufnahme von einem Besucher zu erzeugen, der sich der Zutrittskontrolleinheit nähert,
- aus der digitalen Bildaufnahme einen dritten Biometriedatensatz zu erzeugen,
- den zweiten und den dritten Biometriedatensatz zu vergleichen, und
- bei einer definierten Übereinstimmung zwischen dem zweiten und dem dritten Biometriedatensatz dem Besucher Zutritt zum geschützten Bereich zu gewähren.

7. System gemäß Anspruch 6,
wobei die Zutrittskontrolleinheit konfiguriert ist,
- die Bildaufnahmeeinheit zu veranlassen, eine digitale Bildaufnahme von einem Besucher zu erzeugen, den geschützten Bereich verlassen will oder verlässt oder verlassen hat,
- aus der digitalen Bildaufnahme einen vierten Biometriedatensatz zu erzeugen,
- den vierten und den dritten Biometriedatensatz oder den vierten und den zweiten Biometriedatensatz zu vergleichen, und
- bei einer definierten Übereinstimmung zwischen den verglichenen Biometriedatensätzen in einem Datenspeicher zu speichern, dass der Besucher den geschützten Bereich verlässt oder verlassen hat.

8. System gemäß Anspruch einem der Ansprüche 6 oder 7, wobei die Besucherempfangseinheit und die Zutrittskontrolleinheit örtlich voneinander getrennt sind.

9. System gemäß einem der Ansprüche 6, 7 oder 8, wobei der Zutritt zum geschützten Bereich barrierefrei ist.

10. System gemäß einem der Ansprüche 1 bis 9, ferner umfassend eine An-/Abwesenheitermittlungseinheit, wobei die An-/Abwesenheitermittlungseinheit konfiguriert ist,
- eine erste stille SMS zu versenden,
- eine Antwort auf die erste stille SMS von einem Mobiltelefon zu empfangen, das sich innerhalb des geschützten Bereichs befindet, wobei die Antwort die SIM-Nummer des Mobiltelefons umfasst, und
- in einem Datenspeicher eine Information zu speichern, dass sich ein Besucher mit dem Mobiltelefon in dem geschützten Bereich befindet.

11. System gemäß Anspruch 10, wobei die An-/Abwesenheitermittlungseinheit konfiguriert ist,
- eine zweite stille SMS zu versenden,
- eine Antwort auf die zweite stille SMS von einem Mobiltelefon zu empfangen, das sich nicht mehr innerhalb des geschützten Bereichs befindet, wobei die Antwort die SIM-Nummer des Mobiltelefons umfasst, und
- in einem Datenspeicher eine Information zu speichern, dass sich der Besucher mit dem Mobiltelefon nicht mehr in dem geschützten Bereich befindet.

12. Verfahren zur Verwaltung des Zutritts eines Besuchers zu einem geschützten Bereich, wobei das Verfahren die folgenden Schritte umfasst:
- Extrahieren von Ereignisinformationen aus einem Planungsdatensatz, wobei die Ereignisinformationen Informationen zu einem Ereignis und Kontaktdaten des Besuchers umfassen,
- Übermitteln einer elektronischen Mitteilung an den Besucher, wobei die Mitteilung dem Besucher einen Zugang zu einer Registrierungseinheit verschafft,
- Empfangen von Identitätsdaten des Besuchers über den Zugang zu der Registrierungseinheit,
- Erzeugen eines Ereignisdatensatzes auf Basis des Planungsdatensatzes und der vom Besucher übermittelten Identitätsdaten,
- Übermitteln des Ereignisdatensatzes an eine Besucherempfangseinheit,
- Identifizieren des Besuchers am Tag des Ereignisses,
- Authentifizieren des Besuchers am Tag des Ereignisses,
- Prüfen, ob der Besucher für das Ereignis registriert ist,
- Erteilen einer Zutrittsfreigabe für den Fall, dass der Besucher registriert ist und dass das Ereignis stattfindet.

13. Verfahren gemäß Anspruch 12, umfassend die folgenden Schritte:
- Extrahieren von Ereignisinformationen aus einem Planungsdatensatz, wobei die Ereignisinformationen Informationen zu einem Ereignis und Kontaktdaten eines Besuchers umfassen,
- Übermitteln einer elektronischen Mitteilung an den Besucher, wobei die Mitteilung einen Weblink zu einem Webportal umfasst, wobei der Besucher über das Webportal Zugang zu einer Registrierungseinheit erhält,
- Empfangen von ersten Identitätsdaten des Besuchers über das Webportal,
- Erzeugen eines Ereignisdatensatzes auf Basis des Planungsdatensatzes und der vom Besucher übermittelten ersten Identitätsdaten.

14. Verfahren gemäß einem der Ansprüche 12 oder 13, umfassend die folgenden Schritte:
- Übermitteln des Ereignisdatensatzes an eine Besucherempfangseinheit,
- Identifizieren des Besuchers durch Extrahieren von zweiten Identitätsdaten des Besuchers aus einem Ausweis des Besuchers,
- Erzeugen einer digitalen Bildaufnahme eines in dem Ausweis des Besuchers befindlichen Lichtbildes und Erzeugen eines ersten Biometriedatensatzes,
- Erzeugen einer digitalen Bildaufnahme des Gesichts des Besuchers und Erzeugen eines zweiten Biometriedatensatzes,
- Authentifizieren des Besuchers durch Vergleichen des ersten und des zweiten Biometriedatensatzes,
- Prüfen, ob der Besucher für ein Ereignis an dem Tag registriert ist durch Vergleichen der zweiten Identitätsdaten mit ersten Identitätsdaten, die in Ereignisdatensätzen enthalten sind,
- Erteilen einer Zutrittsfreigabe für den Fall, dass der Besucher registriert ist und dass das Ereignis an dem Tag stattfindet.

15. Verfahren gemäß einem der Ansprüche 12, 13 oder 14, umfassend die folgenden Schritte:
- Erzeugen eines Freigabedatensatzes, wobei der Freigabedatensatz Informationen zu dem Zeitraum, in dem der Besucher den geschützten Bereich betreten darf, umfasst, und wobei der Freigabedatensatz den zweiten Biometriedatensatz umfasst,
- Übermitteln des Freigabedatensatzes an eine Zutrittskontrolleinheit,
- Aufnehmen einer digitalen Bildaufnahme mindestens eines Besuchers, der sich der Zutrittskontrolleinheit nähert,
- Erzeugen eines dritten Biometriedatensatzes aus der digitalen Bildaufnahme,
- Prüfen, ob für den mindestens einen Besucher eine Freigabe vorliegt durch Vergleichen des dritten Biometriedatensatzes mit dem zweiten Biometriedatensatz,
- Prüfen, ob die Freigabe noch gültig ist durch Einordnen der aktuellen Zeit in Bezug auf den Zeitraum, an dem der Besucher den geschützten Bereich betreten darf,
- Gewähren eines Zutritts in den geschützten Bereich für den Fall, dass für den mindestens einen Besucher eine gültige Freigabe vorliegt.

16. Verfahren gemäß einem der Ansprüche 12, 13, 14 oder 15, umfassend die folgenden Schritte:
- Erzeugen einer digitalen Bildaufnahme mindestens eines Besuchers, der den geschützten Bereich verlassen will oder verlässt oder verlassen hat,
- Erzeugen eines vierten Biometriedatensatzes aus der digitalen Bildaufnahme,
- Vergleichen des vierten und des dritten Biometriedatensatzes oder des vierten und des zweiten Biometriedatensatzes, und
- bei einer definierten Übereinstimmung zwischen den verglichenen Biometriedatensätzen Speichern in einem Datenspeicher, dass der Besucher den geschützten Bereich verlässt oder verlassen hat.

17. Verfahren gemäß einem der Ansprüche 12, 13, 14, 15 oder 16, umfassend die folgenden Schritte:
- Versenden einer ersten stillen SMS,
- Empfangen einer Antwort auf die erste stille SMS von einem Mobiltelefon, das sich im geschützten Bereich befindet, wobei die Antwort eine SIM-Nummer des Mobiltelefons umfasst,
- Speichern der SIM-Nummer in einem Datenspeicher zusammen mit der Information, dass sich ein Besucher mit einem Mobiltelefon mit der entsprechenden SIM-Nummer in dem geschützten Bereich befindet,
- Versenden einer zweiten stillen SMS,
- Empfangen einer Antwort auf die zweite stille SMS von einem Mobiltelefon, das sich nicht mehr im geschützten Bereich befindet, wobei die Antwort die SIM-Nummer des Mobiltelefons umfasst,
- Speichern der SIM-Nummer in einem Datenspeicher zusammen mit der Information, dass sich ein Besucher mit einem Mobiltelefon mit der entsprechenden SIM-Nummer nicht mehr in dem geschützten Bereich befindet, oder Löschen des Eintrags, dass sich ein Besucher mit einem Mobiltelefon mit der entsprechenden SIM-Nummer in dem geschützten Bereich befindet.

18. Computerprogrammprodukt umfassend einen Programmcode, der auf einem Datenträger gespeichert ist, und der ein System umfassend eine Verwaltungseinheit, eine Registrierungseinheit und eine Besucherempfangseinheit dazu veranlasst, die folgenden Schritte auszuführen, wenn der Programmcode in den Arbeitsspeichern der genannten Einheiten geladen ist,
- Extrahieren von Ereignisinformationen aus einem Planungsdatensatz, wobei die Ereignisinformationen Informationen zu einem Ereignis und Kontaktdaten mindestens eines Besuchers umfassen,
- Übermitteln einer elektronischen Mitteilung an den mindestens einen Besucher, wobei die Mitteilung dem mindestens einen Besucher einen Zugang zu einer Registrierungseinheit verschafft,
- Empfangen von Identitätsdaten des mindestens einen Besuchers über den Zugang zu der Registrierungseinheit,
- Erzeugen eines Ereignisdatensatzes auf Basis des Planungsdatensatzes und der von dem mindestens einen Besucher übermittelten Identitätsdaten,
- Übermitteln des Ereignisdatensatzes an die Besucherempfangseinheit,
- Identifizieren des Besuchers am Tag des Ereignisses,
- Authentifizieren des Besuchers am Tag des Ereignisses,
- Prüfen, ob der mindestens eine Besucher für das Ereignis registriert ist,
- Erteilen einer Zutrittsfreigabe für den Fall, dass der Besucher registriert ist und dass das Ereignis stattfindet.

19. Computerprogrammprodukt gemäß Anspruch 18, wobei das Computerprogrammprodukt, wenn es in den Arbeitsspeicher eines oder mehrerer Computer gespeichert ist, den einen oder die mehreren Computer veranlasst, das Verfahren gemäß einem der Ansprüche 12 bis 17 auszuführen.
